# EUROPÄISCHE PATENTANMELDUNG

(11) **EP 3 312 711 A1**
(43) Veröffentlichungstag der Anmeldung: **25.04.2018**
(21) Anmeldenummer: 17001011.0
(22) Anmeldetag: 14.06.2017
(51) Int. Cl.: G06F 3/0488, B29C 47/92, G06F 3/0482

(54) **VERFAHREN ZUR SCHNELLEN NAVIGATION IN EINER BENUTZEROBERFLÄCHE, VERFAHREN ZUM HERSTELLEN EINES PRODUKTS AUS THERMOPLASTISCHEM KUNSTSTOFF, ANLAGENSTEUERUNG ZUR SCHNELLEN NAVIGATION IN EINER BENUTZEROBERFÄCHE UND ANLAGE ZUM HERSTELLEN EINES PRODUKTS AUS THERMOPLASTISCHEM KUNSTSTOFF**

(30) Priorität: 18.10.2016 DE 102016012474
(71) Anmelder: Reifenhäuser GmbH & Co. KG Maschinenfabrik, 53844 Troisdorf (DE)
(72) Erfinder: LANG, Lang, DE - 50939 Köln (DE)
(74) Vertreter: Farago-Schauer, Peter Andreas

(57) **Zusammenfassung**

Die Erfindung betrifft ein Verfahren und eine Vorrichtung zur schnelleren Navigation von Benutzern durch die Benutzeroberfläche einer Anlage zum Herstellen eines Produkts aus thermoplastischem Kunststoff, wobei ein Extruder zum Plastifizieren eines thermoplastischen Kunststoffs betrieben wird, sowie ein Verfahren und eine Anlage zum Herstellen eines Produkts aus thermoplastischem Kunststoff.

Die Erfindung ermöglicht ein schnelles Wechseln von Benutzeransichten einer Maschinen- oder Anlagensteuerung, wobei eine Eingabevorrichtung zum Eingeben von repräsentativen Signalen aus einer benutzerindividuellen Eingabebibliothek verwendet wird, welche in einer relationalen Datenbank mit Aktionen verknüpft sind, wobei die Aktionen ein schnelles Wechseln von Benutzeransichten einer Maschinen- oder Anlagensteuerung hervorrufen.

Das schnelle Wechseln von Benutzeransichten macht die Maschinen- oder Anlagensteuerung schneller und die benutzerindividuelle Eingabebibliothek macht die Steuerung intuitiver.

## Beschreibung

Die Erfindung betrifft ein Verfahren zur schnellen Navigation in einer Benutzeroberfläche, ein Verfahren zum Herstellen eines Produkts aus thermoplastischem Kunststoff, eine Anlagensteuerung zur schnellen Navigation in einer Benutzeroberfläche und eine Anlage zum Herstellen eines Produkts aus thermoplastischem Kunststoff.

Insbesondere betrifft die Erfindung ein Verfahren zur schnellen Navigation in einer Benutzeroberfläche, zum Überwachen und Steuern einer Maschine oder einer Anlage zum Herstellen eines Produkts aus thermoplastischem Kunststoff, wobei die Anlage oder Maschine einen Extruder zum Plastifizieren eines thermoplastischen Kunststoffs aufweist, ein Verfahren zum Herstellen eines Produkts aus thermoplastischem Kunststoff, wobei ein Extruder zum Plastifizieren eines thermoplastischen Kunststoffs betrieben wird, eine Anlagensteuerung zur schnellen Navigation in einer Benutzeroberfläche zum Überwachen und Steuern einer Maschine oder einer Anlage zum Herstellen eines Produkts aus thermoplastischem Kunststoff, wobei die Anlage oder Maschine einen Extruder zum Plastifizieren eines thermoplastischen Kunststoffs aufweist, wobei die Benutzeroberfläche eine Mehrzahl Bedienseiten aufweist, wobei ein Bediener mittels einer Eingabeoberfläche ein Eingabesignal zum Navigieren durch die Benutzeroberfläche der Maschine oder Anlage abgibt, wobei die Eingabeoberfläche einen Touchscreen aufweist und eine Anlage zum Herstellen eines Produkts aus thermoplastischem Kunststoff, aufweisend einen Extruder zum Plastifizieren eines thermoplastischen Kunststoffs.

Die Benutzeroberflächen einer Maschinen- oder Anlagenbedienung sind mit den zugehörigen Bedienseiten verlinkt und werden durch Software-Buttons navigierbar gemacht. Die Navigation durch die Bedienseiten funktioniert meistens über einer Baumstruktur. Durch die Verwendung der Baumstruktur muss man um zu einer anderen Bedienseite zu gelangen in der Navigation zurückgehen und dann anschließend zu der Zielseite navigieren.

Die Bedienseiten sind meistens nicht nach der Vorliebe des Bedieners zusammengestellt, somit muss der Bediener zuweilen lange navigieren, bis er auf eine gewünschte Seite kommt.

Die DE 199 42 871 A1 offenbart ein Verfahren zum Betrieb einer sprachgesteuerten Befehlseingabeeinheit in einem Kraftfahrzeug, wobei sämtliche Druckschriften, die keine Maschinensteuerung zeigen, als gattungsfremd einzustufen sind.

Die EP 1 020 789 A1 offenbart eine Vorrichtung mit einer manuellen Steuerung oder einer Sprachsteuerung zum Zugriff auf die Funktionalitäten der Vorrichtung. Sprachbefehle können dabei zum schnellen Zugriff auf Funktionalitäten verwendet werden.

Die DE 102 15 092 A1 beschreibt ein Verfahren zur Erleichterung der Steuerung von zur Ausstattung eines Fahrzeugs gehörenden Geräten.

Die US 7,191,411 B2 beschreibt ein Verfahren für eine Navigation in einer mehrstufigen hierarchisch zusammenklappenden Menüstruktur.

Die WO 2006/125404 A1 offenbart ein Verfahren zum Einstellen eines Feldgeräts, bei dem eine elektronische Steuereinrichtung eines Feldgeräts ein mit dem Feldgerät in Verbindung gebrachtes externes Datenspeichermodul erkennt und anhand gelesener Daten Einstellungen an dem Feldgerät vornimmt.

Die DE 10 2007 051 015 A1 beschreibt ein Dialogsystem für ein Kraftfahrzeug mit einer Mehrzahl an Bedientasten, von denen mindestens eine mit einer Funktion aus einer vorgegebenen Menge von Funktionen belegbar ist.

Die DE 10 2007 051 017 A1 offenbart ein Bediensystem für ein Kraftfahrzeug mit einer Bildschirmanzeige sowie mindestens einem manuellen Betätigungselement zur Auswahl und/oder zur Aktivierung von mindestens einem Eintrag in einer aktuellen Menüebene einer Menüstruktur.

Die DE 10 2009 058 538 A1 beschreibt eine Bedienvorrichtung mit favorisierten Bedienfunktionen für ein Kraftfahrzeug.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe ein Verfahren zur schnellen Navigation in einer Benutzeroberfläche zum Überwachen und Steuern einer Maschine oder einer Anlage zum Herstellen eines Produkts aus thermoplastischem Kunststoff, wobei die Anlage oder Maschine einen Extruder zum Plastifizieren eines thermoplastischen Kunststoffs aufweist, wobei die Benutzeroberfläche eine Mehrzahl Bedienseiten aufweist, wobei ein Bediener mittels einer Eingabeoberfläche ein Eingabesignal zum Navigieren durch die Benutzeroberfläche der Maschine oder Anlage abgibt, wobei die Eingabeoberfläche einen Touchscreen aufweist, wobei das Eingabesignal in einer Datenbank mit einer Bedienseite mittels einer vom Bediener individuell gespeicherten Zuordnung verknüpft ist, und die Benutzeroberfläche direkt bei Eingabe des Eingabesignals auf die verknüpfte Bedienseite wechselt.

### Begrifflich sei hierzu Folgendes erläutert:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei..." usw. gemeint sein können.

Eine "Benutzeroberfläche", insbesondere eine "grafische Benutzeroberfläche" bezeichnet eine Form von Benutzerschnittstelle eines Computers, und zwar eines Computers einer industriellen kunststoffformgebenden Anlage zum Verarbeiten von thermoplastischem Kunststoff. Sie hat die Aufgabe, Anwendungssoftware auf dem Computer mittels grafischer Symbole und Steuerelemente bedienbar zu machen. Eine Benutzeroberfläche kann mittels einer Maus oder durch Berührung eines Sensorbildschirms gesteuert werden, indem grafische Elemente bedient oder ausgewählt werden. Eine "Benutzeroberfläche" weist eine Vielzahl unterschiedlicher Bedienseiten auf.

Eine "Maschine" bezeichnet ein technisches Gebilde mit durch ein Antriebssystem bewegten Teilen.

Eine "Anlage" bezeichnet eine planvolle Zusammenstellung von in räumlichen Zusammenhang stehenden Maschinen, Geräten und/oder Apparaten. Die Maschinen, Geräte beziehungsweise Apparate können funktional, steuerungstechnisch oder sicherheitstechnisch miteinander verknüpft sein.

Eine "Bedienseite" ist ein grafischer Bestandteil einer Benutzeroberfläche. Eine Bedienseite enthält eine grafische Darstellung einer Anlage oder Maschine mit der die Anlage oder Maschine gesteuert und überwacht werden kann.

Eine "Eingabeoberfläche" ist eine Form der Bedienseite für die Benutzeroberfläche. Sie beinhaltet insbesondere die Funktionen Gestensteuerung, Num-Pad, Mustereingabefeld, Speichern, Suchen und Verwalten.

Ein "Eingabesignal", insbesondere eine "Geste", eine "Nummer" oder eine "Muster", ist ein Signal, welches ein Bediener unter Nutzung des Touchscreens eingibt.

Ein "Sensorbildschirm" kann auch als "berührungsempfindlicher Bildschirm" oder als "Touchscreen" bezeichnet werden. Ein Touchscreen ist ein kombiniertes Ein- und Ausgabegerät, bei dem durch Berührung von Teilen eines Bildes der Programablauf eines technischen Gerätes, meist eines Computers, direkt gesteuert werden kann. Die technische Umsetzung der Befehlseingabe ist für den Nutzer gleichsam unsichtbar und erzeugt so den Eindruck einer unmittelbaren Steuerung eines Computers per Fingerzeig. Das Bild, welches durch das Touchpad berührungsempfindlich gemacht wird, kann auf verschiedene Weise erzeugt werden: dynamisch mittels Monitoren, über Projektion oder physikalisch. Statt einen Mauszeiger mit einer Maus oder Ähnlichem zu steuern, kann der Finger oder ein Zeigestift verwendet werden.

Eine "Datenbank" ist ein System zur elektronischen Datenverwaltung. Die Aufgabe der Datenbank ist es, große Datenmengen effizient, widerspruchsfrei und dauerhaft zu speichern und benötigte Teilmengen der gespeicherten Daten in unterschiedlichen, bedarfsgerechten Darstellungsformen für Benutzer und Anwendungsprogramme bereitzustellen.

Der Stand der Technik sah bislang vor, dass die Benutzeroberflächen einer Maschinen- oder Anlagenbedienung mit den zugehörigen Bedienseiten verlinkt sind und durch Software-Buttons navigierbar gemacht werden. Die Navigation durch die Bedienseiten funktioniert dabei in aller Regel über einer Baumstruktur. Durch die Verwendung der Baumstruktur muss man um zu einer anderen Bedienseite zu gelangen in der Navigation zurückgehen und dann anschließend zu der Zielseite navigieren.

Weiterhin sind die Bedienseiten zumeist nicht nach der Vorliebe eines Bedieners zusammengestellt. Besonders bei komplexen Maschinen oder Anlagen mit einer Vielzahl verschachtelter Bedienseiten führt dies dazu, dass ein Bediener oft sehr lange navigieren muss, damit er zu der benötigten Bedienseite gelangt.

Gerade wenn Zeit im Verzug ist und eine schnelle Eingabe durch den Bediener erforderlich ist, kann dies zu Problemen im Umgang mit der Anlagen- oder Maschinensteuerung führen.

Der Stand der Technik bietet für diese Probleme die Lösung an, dass sich Bediener Short-Cuts oder Favoritenleisten anlegen können. So soll dem oben beschriebenen Problem entgegengewirkt werden. "Favoritenleisten" bezeichnen dabei eine Sammlung gespeicherter Links zu Bedienseiten.

Diese vermeintliche Lösung führt bei komplexen Prozessen jedoch dazu, dass erneut eine unübersichtliche Vielzahl an unterschiedlichen Short-Cuts in der Favoritenleiste auf dem Touchscreen angelegt werden müssen, wodurch erneut eine Form der Unübersichtlichkeit der Navigationspfade entsteht, welche erneut mit einem gewissen Suchaufwand für den Bediener verbunden ist. Ferner benötigen die Short-Cuts und Favoritenleisten eine große Fläche auf der Benutzeroberfläche, so dass der Platz zum Anzeigen einer Bedienseite kleiner wird. Folglich dürfen weniger Elemente auf einer Bedienseite untergebracht werden, damit Meldungen an den Bediener und Steuerelemente nicht so klein werden, dass sie vom Bediener nicht mehr zu sehen oder zu bedienen sind.

Aktuell findet sich somit für komplexe Maschinen und Anlagen eine Situation im Stand der Technik, die mehrstufige Navigationsschritte und lange Navigationszeiten erforderlich macht.

Abweichend wird hier vorgeschlagen, die Benutzeroberfläche mit einer einheitlichen Eingabeoberfläche auszustatten, welche unterschiedliche Klassen von individualisierten Eingabesignalen behandeln kann und die bei Eingabe des Eingabesignals durch den Benutzer sofort eine übersichtliche Bedienseite für den Bediener anzeigt.

So übernimmt der Bediener mit einer übersichtlichen Eingabeoberfläche einen schnellen und bequemen Zugriff auf die Bedienerseite.

Die Zuordnung der Eingabesignale zu den Bedienerseiten erfolgt mittels einer Datenbank. Diese Datenbank kann individuell von jedem Bediener nach seinen Vorlieben und Bedürfnissen eingerichtet werden, so dass ein hohes Maß an Intuition für die Steuerung der Maschine oder Anlage erreicht werden kann.

Vorteilhaft kann hierdurch insgesamt erreicht werden, dass ein Benutzer mit bequemen für ihn persönlich intuitiven Eingabesignalen die Bedienseiten der Maschinen- und/oder Anlagensteuerung erreichen kann.

Der Bediener muss so nicht weiter in einer bei komplexen Maschinen oft unübersichtlichen Baumstruktur navigieren und kann durch den schnellen, intuitiven und gezielten Sichtwechsel von Bedienseiten Zeit sparen.

Diese Zeitersparnis kann in kritischen Betriebszuständen den entscheidenden Zeitvorteil ermöglichen, der nötig sein kann um die Produktion innerhalb der zulässigen Parameter fortsetzen zu können, insbesondere kann das Risiko einer Produktionsunterbrechung dadurch beträchtlich gesenkt werden.

Die individuelle Navigation durch die Bedienseiten der Maschinen- und/oder Anlagensteuerung kann damit nicht nur den Bedienkomfort fördern, sondern kann bei einer geeigneten Umsetzung dazu führen, die Gesamteffizienz aus Mensch und Maschine zu erhöhen.

Ein weiterer Vorteil der hier vorgeschlagenen Navigation durch die Bedienseiten kann darin bestehen, dass die Trennung von Eingabeoberfläche und Bedienseite eine Fehlbedienung vermeidet, da die Navigation nicht direkt über die Bedienseite erfolgt und somit eine ungewünschte Fehleingabe auf der Eingabeoberfläche im schlechtesten Fall nur zu einer Fehlnavigation auf eine ungewünschte Bedienseite führen kann, die folgenlos wieder in Richtung der gewünschten Bedienseite verlassen werden kann.

Bevorzugt wird die Eingabeoberfläche durch das gedrückt Halten eines mechanischen Freigabeknopfes freigegeben.

Vorteilhaft kann hierdurch erreicht werden, dass die Anlage oder Maschine gegen eine ungewollte oder unbewusste Fehlbedienung des Bedieners abgesichert werden kann. Optional wird die Eingabeoberfläche durch das gedrückt Halten eines virtuellen Freigabeknopfes auf dem Touchscreen freigegeben.

Vorteilhaft kann hierdurch erreicht werden, dass die Anlage oder Maschine gegen eine ungewollte oder unbewusste Fehlbedienung des Bedieners abgesichert werden kann.

Bevorzugt wird die Eingabeoberfläche mit einem Finger oder mit einem Bedienstift bedient.

### Begrifflich sei hierzu Folgendes erläutert:

Ein "Bedienstift" ist ein Eingabeinstrument, welches in der Hand wie ein Stift gehalten werden kann, wie ein Stift gestaltet ist und wie ein Stift bedient wird, so dass mit dem Bedienstift virtuell auf dem Touchscreen geschrieben werden kann.

Vorteilhaft kann hierdurch erreicht werden, dass der Bedienkomfort für den Bediener einen optimalen und intuitiven Level erreichen kann.

So muss sich der Bediener nicht an komplexe Navigations- oder Steuergeräte gewöhnen, sondern kann sehr einfach und intuitiv die Maschine- und/oder Anlage steuern, insbesondere, da er die Eingabe mit einem Finger oder einem Bedienstift bereits aus einer Vielzahl an Alltagssituationen außerhalb des betrieblichen Umfelds kennen und schätzen gelernt hat. Er ist im Umgang mit diesen Steuerelementen also bereits aus seinem Alltag gewöhnt und kann sich sehr einfach in diese sehr intuitive Form der Maschinen- und/oder Anlagensteuerung einfinden und einpassen.

Optional weist die Eingabeoberfläche eine Gestensteuerung auf, und das Eingabesignal ist eine Geste.

### Begrifflich sei hierzu Folgendes erläutert:

Eine "Geste" ist eine Bewegung zur Interaktion mit einem Computer. Eine Geste findet als Eingabesignal Verwendung.

Eine "Gestensteuerung" ist die automatische Erkennung von durch Menschen ausgeführten Gesten mittels eines Computers zur Mensch-Computer-Interaktion.

So kann der Bediener mit dem Finger oder Bedienstift Figuren (Eingabefiguren) in einem Zug auf der Eingabeoberfläche "malen", z.B. Dreiecke, Kreise usw. Die erzeugten Eingabefiguren sind oder können mit einer beliebigen Bedienseite verknüpft oder verknüpft werden. Bei der Eingabe von abgespeicherten Figuren springt das System direkt auf die verknüpfte Bedienseite. Durch das Erzeugen von Eingabefiguren auf dem Eingabefeld kann man von Seite zur Seite springen.

Vorteilhaft kann hierdurch erreicht werden, dass die Steuerung der Maschine und/oder Anlage noch intuitiver werden, wodurch das Ausmaß an auftretenden Fehlnavigationen weiter gesenkt, der Spaß des Bedieners und die Geschwindigkeit der Navigation weiter gesteigert sowie die Effizienz des Zusammenspiels von Mensch und Maschine verbessert werden können.

Besonders vorteilhaft ist die Navigation mit Gesten, da es Menschen besonders leicht fallen kann eine intuitive Verknüpfung zwischen Prozessen und Abläufen der Maschine und/oder Anlage und einer einfachen Eingabefigur herzustellen.

Bevorzugt ist die Geste eine gemalte Figur, insbesondere ein Dreieck oder ein Kreis oder eine andere ebene geometrische Form, wobei die Figur mittels einer Druckstärkenerkennung auch quasi-dreidimensional sein kann.

Beispielsweise weist die Eingabeoberfläche ein Num-Pad auf, und das Eingabesignal ist eine Nummer.

### Begrifflich sei hierzu Folgendes erläutert:

Eine "Nummer" ist ein aus einer Ziffernfolge bestehender Identifikator, der als Eingabesignal Verwendung findet.

Ein "Num-Pad" ist ein Eingabefeld zur Eingabe einer Nummer.

So kann der Bediener etwa durch die Funktion des Num-Pads eine Nummernfolge eingeben um auf eine gewünschte Bedienseite springen zu können.

Vorteilhaft kann hierdurch erreicht werden, dass die Steuerung der Maschine und/oder Anlage noch intuitiver werden, wodurch das Ausmaß an auftretenden Fehlnavigationen weiter gesenkt, der Spaß des Bedieners und die Geschwindigkeit der Navigation weiter gesteigert sowie die Effizienz des Zusammenspiels von Mensch und Maschine verbessert werden können.

Besonders für intrinsische Menschen mit einem hohen Maß an Zahlenverständnis kann die Navigation mit Nummern besonders vorteilhaft sein.

Optional weist die Eingabeoberfläche ein Mustereingabefeld auf und das Eingabesignal ist ein Muster.

### Begrifflich sei hierzu Folgendes erläutert:

Ein "Muster" ist ein Eingabesignal und bezeichnet eine statische Struktur, die durch ihr erneutes identisches Auftreten erkannt wird. Es ist ein zur gleichförmigen Wiederholung bestimmter Handlungsablauf.

Ein "Mustereingabefeld" ist ein Eingabefeld zur Eingabe eines Musters.

So kann der Bediener etwa durch die Funktion des Mustereingabefeldes sehr individuell, sehr einprägsam und sehr komfortabel mittels der Eingabe eines Musters auf die gewünschte Bedienseite der Maschine gelangen.

Vorteilhaft kann hierdurch erreicht werden, dass die Steuerung der Maschine und/oder Anlage noch intuitiver werden, wodurch das Ausmaß an auftretenden Fehlnavigationen weiter gesenkt, der Spaß des Bedieners und die Geschwindigkeit der Navigation weiter gesteigert sowie die Effizienz des Zusammenspiels von Mensch und Maschine verbessert werden können.

Optional erfolgt die Eingabe des Musters auf einem Punktfeld.

### Begrifflich sei hierzu Folgendes erläutert:

Ein "Punktfeld" ist eine kartesische Anordnung von Punkten.

Die Eingabe eines Musters auf einem Punktfeld erfolgt, indem mit dem Finger oder mit einem Bedienstift ein Kurvenzug gezeichnet wird, insbesondere ein Polygonzug, der eine Menge von Punkten miteinander verbindet. Dabei kann die Menge der auf dem Kurvenzug liegenden Punkte niedriger sein als die Menge der Punkte des Punktfeldes.

In einer vorteilhaften Ausführungsform erfolgt die Eingabe eines Eingabesignals durch ein Muster auf einem Punktfeld nur durch das Erzeugen von einem Muster auf einem Punktfeld.

Vorteilhaft kann hierdurch erreicht werden, dass die Steuerung der Maschine und/oder Anlage noch intuitiver werden, wodurch das Ausmaß an auftretenden Fehlnavigationen weiter gesenkt, der Spaß des Bedieners und die Geschwindigkeit der Navigation weiter gesteigert sowie die Effizienz des Zusammenspiels von Mensch und Maschine verbessert werden können.

Punktfelder können besonders vorteilhaft sein, da die Verknüpfungen durch Kurvenzüge aktiviert werden und die individuellen Kurvenzüge geometrische Bestandteile der Maschine und/oder Anlage repräsentieren können, die gesteuert oder überwacht werden sollen, so dass ein sehr hohes Maß an optischer Zuordnung der einzelnen Verknüpfungen möglich ist.

Bevorzugt weist die Eingabeoberfläche eine Funktion zum Speichern auf, welche eine Verknüpfung von einem Eingabesignal mit einer Bedienseite anlegt und speichert.

### Begrifflich sei hierzu Folgendes erläutert:

Die Funktion "Speichern" ermöglicht eine Verknüpfung zwischen einer Bedienseite und einer Geste, einer Nummer oder einem Muster.

Das Speichern kann wie folgt durchgeführt werden: Wenn eine Bedienseite noch nicht mit Eingabefigur, Nummernfolge oder Muster verknüpft ist bzw. erneut verknüpft werden soll, dann wird diese Schaltfläche aktiviert um sie abzuspeichern. Diese Funktion prüft nach Dopplung von Eingabe und verknüpften Bedienseiten und speichert die neue Verknüpfung ab.

Vorteilhaft kann hierdurch erreicht werden, dass der Bediener individuell abgestimmte Verknüpfungen anlegen und speichern kann, so dass er sie anschließend fortbestehend verwenden kann.

Optional sucht die Funktion "Speichern" vor dem Speichern nach einer Dopplung der Eingabe und der Verknüpfung der Bedienseite.

Vorteilhaft kann hierdurch erreicht werden, dass ein und dasselbe Eingabesignal nicht mehrfach verwendet werden kann. Außerdem kann erreicht werden, dass für jede Bedienseite nur eine Verknüpfung besteht, so dass eine eindeutige Zuordnung mit der minimalen Anzahl an verwendeten Verknüpfungen erreicht werden kann.

Bevorzugt weist die Eingabeoberfläche eine Funktion "Suchen" auf, wobei damit eine Verknüpfung von einem Eingabesignal mit einer Bedienseite in der Datenbank gesucht wird.

### Begrifflich sei hierzu Folgendes erläutert:

Die Funktion "Suchen" ermöglicht ein Durchsuchen der Datenbank nach abgespeicherter Verknüpfung zwischen einer Bedienseite und einer Geste, einer Nummer oder einem Muster.

Der Bediener kann durch diese Funktion seinen Eingabefiguren, Nummernfolgen und Mustern auflisten lassen und wiederfinden.

Vorteilhaft kann hierdurch erreicht werden, dass der Bediener die Funktionalität der Eingabeoberfläche optimal nutzen, programmieren, erlernen und nutzen kann.

Optional weist die Eingabeoberfläche eine Funktion "Verwalten" auf, wobei damit eine Verknüpfung von einem Eingabesignal mit einer Bedienseite in der Datenbank verwaltet wird, wobei insbesondere eine Mehrzahl von Verknüpfungen sortiert oder eine Verknüpfung gelöscht werden können.

### Begrifflich sei hierzu Folgendes erläutert:

Die Funktion "Verwalten" ermöglicht das Sortieren und Löschen von Verknüpfungen zwischen einer Bedienseite und einer Geste, einer Nummer oder einem Muster.

Ein "Menü" ist eine Form der interaktiven Benutzerführung bei Computerprogrammen mit grafischer, zeichenorientierter oder sprachorientierter Benutzeroberfläche. Es ermöglicht, den gewünschten Befehl aus einem Angebot auszuwählen und ausführen zu lassen, ohne genaue Steuerbefehle kennen und anwenden zu müssen.

Der Bediener kann durch diese Funktion seinen Eingabefiguren, Nummernfolgen und Mustern auflisten lassen und verwalten. Die Verwaltung ermöglicht ein sortieren und löschen der Verknüpfungen der Benutzerindividuellen Eingabesignale.

Vorteilhaft kann hierdurch erreicht werden, dass der Bediener die Funktionalität der Eingabeoberfläche optimal nutzen, programmieren, erlernen und nutzen kann.

Bevorzugt ist die Datenbank eine relationale Datenbank.

### Begrifflich sei hierzu Folgendes erläutert:

Eine "relationale Datenbank" dient zur elektronischen Datenverwaltung in Computersystemen und beruht auf einem tabellenbasierten relationalen Datenbankmodell.

Vorteilhaft kann hierdurch erreicht werden, dass die Zuordnung der Verknüpfungen sehr einfach und effizient sein kann.

Optional weist die Datenbank eine Eingabebibliothek auf, die eine Mehrzahl von Verknüpfungen von einem Eingabesignal mit einer Bedienseite aufweist.

### Begrifflich sei hierzu Folgendes erläutert:

Eine "Eingabebibliothek" verwaltet die Zuordnung von Eingabesignal und verknüpfter Bedienerseite.

Vorteilhaft kann hierdurch erreicht werden, dass der Verwaltungsprozess der Verknüpfungen besonderes einfach sein kann, da der Bediener den Umgang mit einer Bibliothek aus seinem Leben, auch abseits des Arbeitsumfeldes sehr gut kennt.

Vorteilhaft kann hierdurch erreicht werden, dass die Steuerung der Maschine und/oder Anlage noch intuitiver werden, wodurch das Ausmaß an auftretenden Fehlnavigationen weiter gesenkt, der Spaß des Bedieners und die Geschwindigkeit der Navigation weiter gesteigert sowie die Effizienz des Zusammenspiels von Mensch und Maschine verbessert werden können.

Bevorzugt ist die Eingabebibliothek für jeden Bediener individuell.

Vorteilhaft kann hierdurch erreicht werden, dass die Maschinen- und/oder Anlagensteuerung individuell und optimal auf die Bedürfnisse und Gewohnheiten eines spezifischen Bedieners abgestimmt werden können.

Vorteilhaft kann hierdurch erreicht werden, dass die Steuerung der Maschine und/oder Anlage noch intuitiver werden, wodurch das Ausmaß an auftretenden Fehlnavigationen weiter gesenkt, der Spaß des Bedieners und die Geschwindigkeit der Navigation weiter gesteigert sowie die Effizienz des Zusammenspiels von Mensch und Maschine verbessert werden können.

Nach einem zweiten Aspekt der Erfindung löst die Aufgabe ein Verfahren zum Herstellen eines Produkts aus thermoplastischem Kunststoff, wobei ein Extruder zum Plastifizieren eines thermoplastischen Kunststoffs betrieben wird, wobei während des Herstellens ein Verfahren wie vorstehend beschrieben durchgeführt wird.

Es versteht sich, dass sich die Vorteile eines Verfahrens zur schnellen Navigation in einer Benutzeroberfläche zum Überwachen und Steuern einer Maschine oder einer Anlage zum Herstellen eines Produkts aus thermoplastischem Kunststoff wie vorstehend beschrieben unmittelbar auf eine Maschine oder ein Verfahren zum Herstellen eines Produkts aus thermoplastischem Kunststoff, wobei ein Extruder zum Plastifizieren eines thermoplastischen Kunststoffs betrieben wird, erstrecken.

Es sei ausdrücklich darauf hingewiesen, dass der Gegenstand des zweiten Aspekts mit dem Gegenstand des ersten Aspekts der Erfindung vorteilhaft kombinierbar ist.

Nach einem dritten Aspekt der Erfindung löst die Aufgabe eine Anlagensteuerung zur schnellen Navigation in einer Benutzeroberfläche zum Überwachen und Steuern einer Maschine oder einer Anlage zum Herstellen eines Produkts aus thermoplastischem Kunststoff, wobei die Maschine oder Anlage einen Extruder zum Plastifizieren eines thermoplastischen Kunststoffs aufweist, wobei die Benutzeroberfläche eine Mehrzahl Bedienseiten aufweist, wobei ein Bediener mittels einer Eingabeoberfläche ein Eingabesignal zum Navigieren durch die Benutzeroberfläche der Maschine oder Anlage abgibt, wobei die Eingabeoberfläche einen Touchscreen aufweist, wobei die Anlagensteuerung eine Datenverarbeitungs- und -auswerteeinheit aufweist, wobei die Datenverarbeitungs- und -auswerteeinheit eine Programmierung aufweist und über einen Zugriff auf eine Datenbank verfügt, wobei die Programmierung zum Ausführen eines Verfahrens nach einem der vorstehenden Ansprüche eingerichtet ist.

### Begrifflich sei hierzu Folgendes erläutert:

Eine "Datenverarbeitungs- und -auswerteeinheit" ist eine elektronische Einheit, die organisiert mit Datenmengen umgeht und dabei das Ziel verfolgt, Informationen über diese Datenmengen zu gewinnen oder diese Datenmengen zu verändern. Dabei werden die Daten in Datensätzen erfasst, nach einem vorgegebenen Verfahren durch Mensch oder Maschine verarbeitet und als Ergebnis ausgegeben.

Vorteilhaft kann hierdurch erreicht werden, dass die Vorteile, welche bereits oberhalb bei den Aspekten zum Verfahren zur schnellen Navigation in einer Benutzeroberfläche genannt und erörtert wurden, auf eine Maschinensteuerung übertragen werden können. Insbesondere eine Maschinensteuerung mit einer schnellen Benutzernavigation durch die Bedienseiten einer Benutzeroberfläche.

Es versteht sich, dass sich die Vorteile der Verfahrensaspekte auf die Maschinensteuerung erstrecken.

Bevorzugt weist die Maschinensteuerung einen Freigabeknopf auf, welcher die Verwendung der Eingabeoberfläche freigibt.

Eine Eingabeoberfläche wird durch das gedrückt Halten eines Freigabeknopfes aktiviert.

Vorteilhaft kann hierdurch erreicht werden, dass die Anlage oder Maschine gegen eine ungewollte oder unbewusste Fehlbedienung des Bedieners abgesichert werden kann.

Vorteilhaft kann dadurch erreicht werden, dass das Risiko einer Fehlbedienung der Maschine oder Anlage reduziert werden kann.

Optional ist das Eingabesignal in einer Datenbank mit einer Bedienseite verknüpft und die Benutzeroberfläche wechselt direkt bei Eingabe des Eingabesignals auf die verknüpfte Bedienseite, wobei das Eingabesignal eine Geste und/oder eine Nummer und/oder ein Muster ist.

Vorteilhaft kann hierdurch erreicht werden, dass die Steuerung der Maschine und/oder Anlage noch intuitiver werden, wodurch das Ausmaß an auftretenden Fehlnavigationen weiter gesenkt, der Spaß des Bedieners und die Geschwindigkeit der Navigation weiter gesteigert sowie die Effizienz des Zusammenspiels von Mensch und Maschine verbessert werden können.

Es sei ausdrücklich darauf hingewiesen, dass der Gegenstand des dritten Aspekts mit dem Gegenstand jedes der vorstehenden Aspekte der Erfindung einzeln oder in beliebieger Kombination kumulativ vorteilhaft kombinierbar ist.

Nach einem vierten Aspekt der Erfindung löst die Aufgabe eine Anlage zum Herstellen eines Produkts aus thermoplastischem Kunststoff, aufweisend einen Extruder zum Plastifizieren eines thermoplastischen Kunststoffs, wobei die Anlage eine Maschinensteuerung nach einem der Ansprüche des dritten Aspekts der Erfindung aufweist.

Es versteht sich, dass sich die Vorteile einer Anlagensteuerung zur schnellen Navigation in einer Benutzeroberfläche zum Überwachen und Steuern einer Maschine oder einer Anlage zum Herstellen eines Produkts aus thermoplastischem Kunststoff sich auch auf eine Anlage zum Herstellen eines Produkts aus thermoplastischem Kunststoff erstrecken.

Es sei ausdrücklich darauf hingewiesen, dass der Gegenstand des vierten Aspekts mit dem Gegenstand jedes der vorstehenden Aspekte der Erfindung einzeln oder kumulativ vorteilhaft kombinierbar ist.

Bevorzugt müssen die Gesten, Eingabefiguren, Nummernfolgen oder Muster eindeutig sein.

Vorteilhaft kann dadurch erreicht werden, dass das Risiko einer Fehlbedienung der Maschine oder Anlage reduziert werden kann.

Bevorzugt handelt sich nur um das schnelle Wechseln von favorisierten Bedienseiten ohne Fehlbedienungsrisiko, da die Funktionen der Anlage nicht durch das Verfahren zur schnellen Navigation in einer Benutzeroberfläche berührt werden.

Vorteilhaft kann dadurch erreicht werden, dass das Risiko einer Fehlbedienung der Maschine oder Anlage reduziert werden kann.

Nachstehend wird die Erfindung anhand zweier Ausführungsbeispiele unter Bezugnahme auf die Zeichnung näher erläutert. Dort zeigen
- Fig. 1: ein schematisches Beispiel einer Eingabeoberflächengestaltung,
- Fig. 2: eine vergrößerte Ansicht einer Eingabeoberfläche,
- Fig. 3: ein Ausführungsbeispiel einer Navigation einer Benutzeroberfläche einer Maschinen- oder Anlagensteuerung mittels einer Geste,
- Fig. 4: ein Ausführungsbeispiel einer Navigation einer Benutzeroberfläche einer Maschinen- oder Anlagensteuerung mittels einer Nummer, und
- Fig. 5: ein Ausführungsbeispiel einer Navigation einer Benutzeroberfläche einer Maschinen- oder Anlagensteuerung mittels eines Musters auf einem Punktfeld.

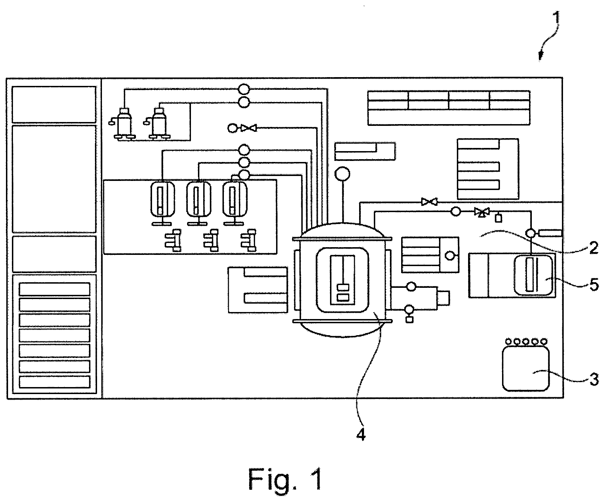

Eine Benutzeroberfläche 1 zum Überwachen und Steuern einer Maschine oder Anlage bestehend aus einer Bedienseite 2 und einer Eingabeoberfläche 3 ist in Figur 1 abgebildet.

Die Bedienseite weist eine Vielzahl unterschiedlicher Bedienelemente 4, 5 auf, die zur Überwachung und Steuerung der Maschine oder Anlage verwendet werden können (Aus Gründen der Übersichtlichkeit sind beispielhaft nur zwei Bedienelemente aufgezählt.).

Die Bedienelemente 4, 5 weisen dabei eine verfahrenstechnisch bedingte Verknüpfung untereinander auf.

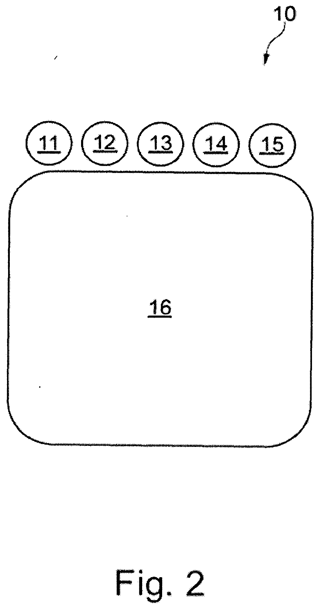

Eine Eingabeoberfläche 3, 10 weist ein Eingabefeld 16 und mehrere Funktionselemente 11, 12, 13, 14, 15 auf und ist in Figur 2 vergrößert dargestellt und aus der Benutzeroberfläche 1 aus Figur 1 zur besseren Übersichtlichkeit und Erläuterung hervorgehoben.

Das Eingabefeld 16 kann von seiner Darstellung her an unterschiedliche Eingabesignale angepasst werden, insbesondere für eine Geste, eine Nummer oder ein Muster.

Das Eingabefeld 16 aus Figur 2 ist für das Eingabesignal einer Geste angepasst.

Die Funktionselemente 11, 12, 13, 14, 15 der Eingabeoberfläche 3, 10 können mit unterschiedlichen Funktionen belegt werden, insbesondere mit den Funktionen "Suchen", "Speichern", "Verwalten" und "Wechseln Darstellung Eingabesignal".

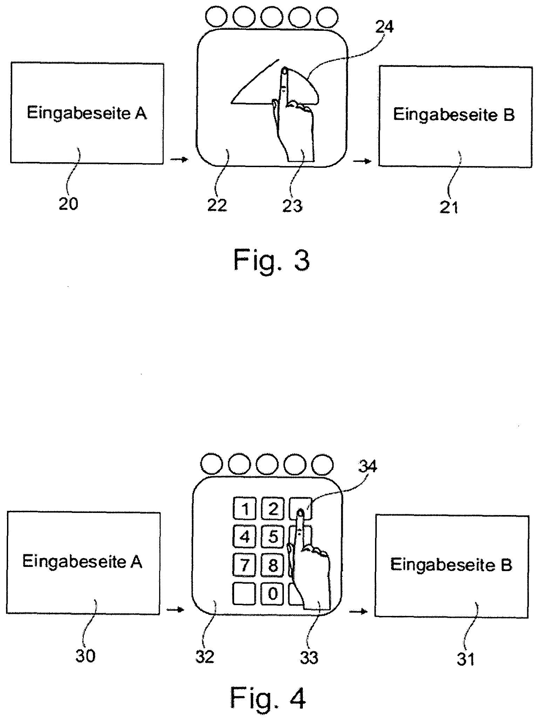

Eine konkrete Ausführungsform, in welcher der Benutzer mit einer Hand 23 durch Eingabe einer Geste 24 auf einem Eingabefeld für eine Geste 22 von einer Eingabeseite 20 auf eine andere Eingabeseite 21 wechselt, ist in Figur 3 schematisch dargestellt.

Eine alternative Ausführungsform, in welcher der Benutzer mit einer Hand 33 durch Eingabe einer Nummer 34 auf einem Eingabefeld Num-Pad 32 von einer Eingabeseite 30 auf eine andere Eingabeseite 31 wechselt, ist in Figur 4 schematisch dargestellt.

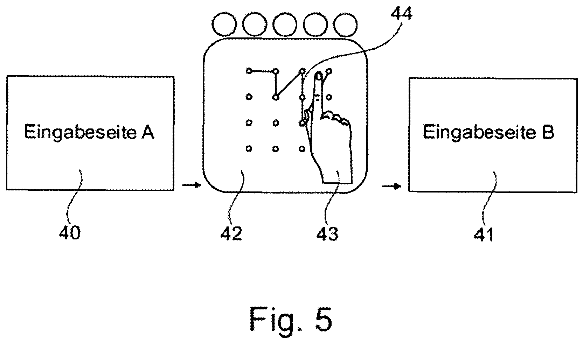

Eine alternative Ausführungsform, in welcher der Benutzer mit einer Hand 43 durch Eingabe eines Musters 44 auf einem Eingabefeld Muster mit Punktfeld 42 von einer Eingabeseite 40 auf eine andere Eingabeseite 41 wechselt, ist in Figur 5 schematisch dargestellt.

### Liste der verwendeten Bezugszeichen

- 1: Benutzeroberfläche
- 2: Bedienseite
- 3: Eingabeoberfläche
- 4: Bedienelement
- 5: Bedienelement
- 10: Eingabeoberfläche
- 11: Funktionselement
- 12: Funktionselement
- 13: Funktionselement
- 14: Funktionselement
- 15: Funktionselement
- 16: Eingabefeld
- 20: Eingabeseite
- 21: Eingabeseite
- 22: Eingabefeld
- 23: Hand
- 24: Geste
- 30: Eingabeseite
- 31: Eingabeseite
- 32: Eingabefeld
- 33: Hand
- 34: Nummer
- 40: Eingabeseite
- 41: Eingabeseite
- 42: Eingabefeld
- 43: Hand
- 44: Muster

## Patentansprüche

1. Verfahren zur schnellen Navigation in einer Benutzeroberfläche
zum Überwachen und Steuern einer Maschine oder einer Anlage zum Herstellen eines Produkts aus thermoplastischem Kunststoff, wobei die Anlage oder Maschine einen Extruder zum Plastifizieren eines thermoplastischen Kunststoffs aufweist,
wobei die Benutzeroberfläche eine Mehrzahl Bedienseiten aufweist, wobei ein Bediener mittels einer Eingabeoberfläche ein Eingabesignal zum Navigieren durch die Benutzeroberfläche der Maschine oder Anlage abgibt, wobei die Eingabeoberfläche einen Touchscreen aufweist,
***dadurch gekennzeichnet*, *dass***
das Eingabesignal in einer Datenbank mit einer Bedienseite mittels einer vom Bediener individuell gespeicherten Zuordnung verknüpft ist,
und die Benutzeroberfläche direkt bei Eingabe des Eingabesignals auf die verknüpfte Bedienseite wechselt.

2. Verfahren nach Anspruch 1, ***dadurch gekennzeichnet, dass*** die Eingabeoberfläche durch das gedrückt Halten eines mechanischen Freigabeknopfes freigegeben wird.

3. Verfahren nach einem der Ansprüche 1 oder 2, ***dadurch gekennzeichnet*, *dass*** die Eingabeoberfläche durch das gedrückt Halten eines virtuellen Freigabeknopfes auf dem Touchscreen freigegeben wird.

4. Verfahren nach einem der vorstehenden Ansprüche, ***dadurch gekennzeichnet, dass*** die Eingabeoberfläche mit einem Finger oder mit einem Bedienstift bedient wird.

5. Verfahren nach einem der vorstehenden Ansprüche, ***dadurch gekennzeichnet, dass*** die Eingabeoberfläche eine Gestensteuerung aufweist und das Eingabesignal eine Geste ist.

6. Verfahren nach Anspruch 5, ***dadurch gekennzeichnet, dass*** die Geste eine gemalte Figur ist, insbesondere ein Dreieck oder ein Kreis oder eine andere ebene geometrische Form, wobei die Figur mittels einer Druckstärkenerkennung auch quasi-dreidimensional sein kann.

7. Verfahren nach einem der vorstehenden Ansprüche, ***dadurch gekennzeichnet, dass*** die Eingabeoberfläche ein Num-Pad aufweist und das Eingabesignal eine Nummer ist.

8. Verfahren nach einem der vorstehenden Ansprüche, ***dadurch gekennzeichnet, dass*** die Eingabeoberfläche ein Mustereingabefeld aufweist und das Eingabesignal ein Muster ist.

9. Verfahren nach Anspruch 8, ***dadurch gekennzeichnet, dass*** die Eingabe des Musters auf einem Punktfeld erfolgt.

10. Verfahren nach einem der vorstehenden Ansprüche, ***dadurch gekennzeichnet*, *dass*** die Eingabeoberfläche eine Funktion zum Speichern aufweist und damit eine Verknüpfung von einem Eingabesignal mit einer Bedienseite angelegt und gespeichert wird.

11. Verfahren nach Anspruch 10, ***dadurch gekennzeichnet*, *dass*** die Funktion "Speichern" vor dem Speichern eine Dopplung der Eingabe und der Verknüpfung der Bedienseite sucht.

12. Verfahren nach einem der vorstehenden Ansprüche, ***dadurch gekennzeichnet*, *dass*** die Eingabeoberfläche eine Funktion "Suchen" aufweist und damit eine Verknüpfung von einem Eingabesignal mit einer Bedienseite in der Datenbank gesucht wird.

13. Verfahren nach einem der vorstehenden Ansprüche, ***dadurch gekennzeichnet, dass*** die Eingabeoberfläche eine Funktion "Verwalten" aufweist und damit eine Verknüpfung von einem Eingabesignal mit einer Bedienseite in der Datenbank verwaltet wird, wobei insbesondere eine Mehrzahl von Verknüpfungen sortiert oder eine Verknüpfung gelöscht werden können.

14. Verfahren nach einem der vorstehenden Ansprüche, ***dadurch gekennzeichnet, dass*** die Datenbank eine relationale Datenbank ist.

15. Verfahren nach einem der vorstehenden Ansprüche, ***dadurch gekennzeichnet, dass*** die Datenbank eine Eingabebibliothek aufweist, die eine Mehrzahl von Verknüpfungen von einem Eingabesignal mit einer Bedienseite aufweist.

16. Verfahren nach einem der vorstehenden Ansprüche, ***dadurch gekennzeichnet, dass*** die Eingabebibliothek für jeden Bediener individuell ist.

17. Verfahren zum Herstellen eines Produkts aus thermoplastischem Kunststoff, wobei ein Extruder zum Plastifizieren eines thermoplastischen Kunststoffs betrieben wird,
***dadurch gekennzeichnet, dass***
während des Herstellens ein Verfahren nach einem der vorstehenden Ansprüche durchgeführt wird.

18. Anlagensteuerung zur schnellen Navigation in einer Benutzeroberfläche zum Überwachen und Steuern einer Maschine oder einer Anlage zum Herstellen eines Produkts aus thermoplastischem Kunststoff, wobei die Maschine oder Anlage einen Extruder zum Plastifizieren eines thermoplastischen Kunststoffs aufweist, wobei die Benutzeroberfläche eine Mehrzahl Bedienseiten aufweist, wobei ein Bediener mittels einer Eingabeoberfläche ein Eingabesignal zum Navigieren durch die Benutzeroberfläche der Maschine oder Anlage abgibt, wobei die Eingabeoberfläche einen Touchscreen aufweist,
***dadurch gekennzeichnet, dass***
die Anlagensteuerung eine Datenverarbeitungs- und -auswerteeinheit aufweist, wobei die Datenverarbeitungs- und -auswerteeinheit eine Programmierung aufweist und über einen Zugriff auf eine Datenbank verfügt, wobei die Programmierung zum Ausführen eines Verfahrens nach einem der vorstehenden Ansprüche eingerichtet ist.

19. Maschinensteuerung nach Anspruch 18, ***dadurch gekennzeichnet, dass*** die Maschinensteuerung einen Freigabeknopf aufweist, welcher die Verwendung der Eingabeoberfläche freigibt.

20. Maschinensteuerung nach einem der Ansprüche 18 oder 19, wobei das Eingabesignal in einer Datenbank mit einer Bedienseite verknüpft ist und die Benutzeroberfläche direkt bei Eingabe des Eingabesignals auf die verknüpfte Bedienseite wechselt, ***dadurch gekennzeichnet*, *dass*** das Eingabesignal eine Geste und/oder eine Nummer und/oder ein Muster ist.

21. Anlage zum Herstellen eines Produkts aus thermoplastischem Kunststoff, aufweisend einen Extruder zum Plastifizieren eines thermoplastischen Kunststoffs,
***dadurch gekennzeichnet, dass***
die Anlage eine Maschinensteuerung nach einem der Ansprüche 17 bis 19 aufweist.
